# FASCICULE DE BREVET EUROPEEN

(11) **EP 2 015 409 B1**
(45) Date de publication et mention de la délivrance du brevet: **03.11.2010**
(21) Numéro de dépôt: 08290469.9
(22) Date de dépôt: 20.05.2008
(51) Int. Cl.: H01S 3/131

(54) **Elément actif amplificateur pour une source laser et source laser comportant un tel élément actif amplificateur**
Aktives Element für Laser-Quelle und Laser-Quelle mit diesem aktiven Element
An active element for a laser source and a laser source comprising such an active element

(30) Priorité: 12.06.2007 FR 0704168
(43) Date de publication de la demande: 14.01.2009
(73) Titulaire: Compagnie Industrielle des Lasers Cilas, 45100 Orleans (FR)
(72) Inventeur: Rapaport, Alexandra, 13260 Cassis (FR); Nguyen, Luc, 92160 Antony (FR); Montagne, Jean-Eucher, 45000 Orleans (FR)
(74) Mandataire: Bonnetat, Christian

(56) Documents cités:
- EP-A- 1 115 186
- FR-A- 1 490 528
- FR-A- 2 885 267
- US-A- 2003 021 324
- US-A1- 2005 018 743
- PÉREZ-MILLÁN P ET AL: "Active Q-switched distributed feedback erbium-doped fiber lasers" APPLIED PHYSICS LETTERS, AIP, AMERICAN INSTITUTE OF PHYSICS, MELVILLE, NY, US, vol. 87, no. 1, 28 juin 2005 (2005-06-28), pages 11104-11104, XP012075482 ISSN: 0003-6951
- IMENKOV A N ET AL: "THE SPECTRAL LINEWIDTH OF TUNABLE SEMICONDUCTOR INASB/INASSBP LASERS EMITTING AT 3.2-3.6 MUM (2800-3100 CM-1)" REVIEW OF SCIENTIFIC INSTRUMENTS, AIP, MELVILLE, NY, US, vol. 72, no. 4, avril 2001 (2001-04), pages 1988-1992, XP001102179 ISSN: 0034-6748
- BROWN D.C. ET AL: 'Parasitic Oscillations and Amplified Spontaneous Emission in face-pumped total internal reflection Lasers' SPIE - THE INTERNATIONAL SOCIETY FOR OPTICAL ENGINEERING - NEW SLAB AND SOLID-STATE LASER TECHNOLOGIES AND APPLICATIONS (1987) vol. 736, 1987, pages 74 - 83, XP000654815
- MCMAHON J.M. ET AL: 'A Glass-Disk-Laser Amplifier' IEEE JOURNAL OF QUANTUM ELECTRONICS vol. QE-9, no. 10, Octobre 1973, pages 992 - 999

## Description

La présente invention concerne un élément actif pour source laser, ainsi qu'une source laser comportant un tel élément actif.

Plus précisément, ladite source laser est du type comportant :
- un élément actif comprenant un barreau allongé, de section transversale généralement circulaire, mais non exclusivement, comportant une matrice dopée susceptible d'absorber un faisceau de pompage se propageant longitudinalement pour amplifier un rayonnement laser se propageant également longitudinalement ;
- un système de pompage, comportant des diodes (laser) de pompage susceptibles d'émettre ledit faisceau de pompage longitudinal ;
- un système optique de transport pour diriger le faisceau de pompage émis par ledit système de pompage dans ledit élément actif de manière à obtenir un pompage longitudinal ; et
- une cavité optique permettant d'extraire ledit rayonnement laser.

On sait que, pour être efficace, le faisceau de pompage doit être spectralement accordé au spectre d'absorption de l'élément actif de telle sorte que ledit faisceau de pompage soit absorbé et transfère son énergie vers l'ion (terre rare ou métal de transition par exemple) dopant ledit élément actif.

On sait également que les diodes (laser) de pompage présentent un spectre d'émission, généralement de quelques nanomètres de large, qui se décale de 0,25 à 0,3 nanomètre par degré Celsius, lorsque l'on fait varier la température desdites diodes de pompage.

Pour assurer une conformité satisfaisante de la longueur d'onde du faisceau de pompage (issu desdites diodes de pompage) avec le spectre d'absorption du milieu actif, il est connu de monter lesdites diodes sur des modules Peltier, dont la fonction est de stabiliser leur température à mieux que 0,5°C, de sorte qu'un centrage de longueur d'onde est assuré à au moins 0,2 nm.

Toutefois, notamment dans le cadre d'applications militaires, les paramètres de compacité, de consommation d'énergie et de rapidité de mise en oeuvre revêtent une importance particulière. Aussi, l'utilisation de modules Peltier, qui induit une consommation d'énergie importante et qui nécessite un temps de stabilisation de l'ordre de la minute, est un frein à l'emploi de sources laser pompées par diode(s) dans des systèmes compacts. Il en va de même pour d'autres systèmes de stabilisation actifs de la température des diodes. Aussi, la technologie toujours mise en oeuvre actuellement, par exemple pour des désignateurs laser terrestres, est une technologie de pompage par flash, qui est peu rentable et encombrante.

Pour essayer de remédier à ce problème, il convient donc :
- soit d'augmenter la tolérance de l'élément actif à la dérive de longueur d'onde, ce qui est proposé par exemple par le brevet FR-2 803 697, pour lequel le faisceau de pompage est guidé pour passer plusieurs fois à travers l'élément actif ;
- soit de mettre en oeuvre une stabilisation passive de la longueur d'onde d'émission des diodes de pompage, comme proposé par exemple dans la demande de brevet US-2005/0018743 qui décrit l'utilisation d'un système incluant un ou plusieurs Réseaux de Bragg en Volume (RBV ou VBG, pour "Volume Bragg Grating" en anglais) afin de conditionner une ou plusieurs caractéristiques d'émission du laser.

Toutefois, les solutions précédentes permettent uniquement d'obtenir une insensibilité de 3 à 10 nanomètres correspondant à une dérive de température des diodes de 15 à 40°C. Une telle plage d'insensibilité thermique est largement insuffisante pour utiliser le système de pompage, par exemple dans un désignateur laser terrestre, entre -40°C et +70°C.

La présente invention a pour objet de fournir un élément actif et une source laser permettant d'obtenir une insensibilité thermique de l'émission laser sur plus de 15 nanomètres.

On sait que la proportion d'énergie de pompage absorbée par l'élément actif dépend, d'une part, du coefficient d'absorption α(λ) de l'élément actif et, d'autre part, de la longueur de matériau L, traversée par le faisceau de pompage. Cette proportion d'énergie absorbée Abs vérifie la relation Abs(λ)=1-Exp[-α(λ)·L] dans le cas d'un matériau homogène ou Abs(λ) = 1-Exp[-α1(λ)·L1-α2(λ)·L2-...-αn(λ)·Ln] dans le cas d'un matériau composé de n zones d'absorption αi(λ) et de longueur Li et Abs(λ) = 1-Exp[-∫α(λ, z)dz] dans le cas le plus général où le dopage et l'absorption varient dans le barreau en fonction de la position longitudinale z, λ désignant la longueur d'onde de l'émission laser. Aussi, pour optimiser ladite proportion Abs, il convient de maximiser, d'une part, ledit coefficient d'absorption α pour toutes les longueurs d'onde intéressantes et, d'autre part, ladite longueur traversée par le faisceau de pompage. Afin que la proportion Abs reste toujours supérieure à environ 80-90% pour l'ensemble de la plage spectrale visée, il faut que la longueur d'absorption soit adaptée au coefficient le plus faible.

On sait, par ailleurs, qu'il est difficile d'extraire convenablement l'énergie d'un grand volume d'élément actif, dans lequel l'énergie de pompage serait dispersée. Aussi, il est avantageux de mettre en oeuvre une configuration de pompage longitudinal, pour laquelle la longueur d'absorption du faisceau de pompage peut être longue, pourvu que celui-ci soit colinéaire (ou quasiment) à l'axe de la source laser. L'élément actif est donc alors adapté pour recevoir et véhiculer une radiation de pompage se propageant de manière colinéaire (ou quasiment) à l'axe de la source laser.

La principale difficulté d'un pompage longitudinal à des niveaux élevés de puissance (supérieurs à 500 W), lorsqu'on veut faire un laser déclenché, réside dans la production d'effets parasites, tels qu'une amplification d'émission spontanée (amplification ASE ci-après) ou des modes d'émission parasites (modes MEP ci-après). L'amplification ASE provient d'une radiation spontanée, naturellement émise par les ions excités par le faisceau de pompage et amplifiée par le gain résultant de la présence de ces ions excités. Les modes MEP, quant à eux, proviennent de la combinaison :
- de réflexions présentes aux bords de l'élément actif et/ou sur tout autre réflecteur ; et
- du gain laser provenant des ions excités.

La combinaison de ces deux facteurs engendre une émission laser parasite suivant un ou plusieurs axes qui sont habituellement distincts de l'axe laser principal.

L'amplification ASE est un paramètre gouverné essentiellement par le gain et la longueur maximale de gain possible dans l'élément actif. La seule possibilité de diminuer son effet est de limiter la longueur de gain ou la valeur du gain.

En outre, les modes MEP sont gouvernés par le gain et la présence de réflexions parasites qui renvoient des photons vers le laser et permettent ainsi un cyclage à gain de ces photons.

La présente invention a pour objet de remédier à ces inconvénients. Elle concerne un élément actif pour source laser, permettant d'obtenir une insensibilité thermique importante, tout en limitant la génération d'effets parasites du type précité (amplification ASE et modes MEP).

A cette fin, l'invention consiste en un élément actif pour source laser défini dans la revendication 1.

Ainsi, grâce à la présente invention, on peut obtenir un pompage particulièrement efficace sur une plage spectrale de plus d'une vingtaine de nanomètres, ainsi qu'une suppression très importante, sinon totale, des rayonnements parasites qui ont tendance à se développer dans ledit barreau, ce qui permet d'interdire les modes MEP et de minimiser la longueur d'amplification ASE. Ladite zone dépolie doit empêcher toute réflexion spéculaire et elle peut être obtenue par tout moyen connu tel que abrasion, attaque chimique, ultrasons, sablage, cannelage, etc ...

L'étendue totale de ladite zone dépolie diffusante sur la surface latérale dudit barreau est au moins approximativement comprise entre 5% et 40% de la surface latérale dudit barreau.

Pour expliquer le mode d'élimination des modes MEP par ladite zone dépolie diffusante, on peut prendre l'exemple d'un barreau cylindrique dans lequel on distingue les modes MEP 2D (modes MEP à deux dimensions) et les modes MEP 3D (modes MEP à trois dimensions).

Les modes MEP 2D se développent dans une section du barreau en suivant des trajets en forme de polygone, chaque sommet du polygone constituant un rebond sur la périphérie du barreau. Plus l'indice de l'enveloppe est faible, plus le nombre de MEP 2D polygonaux existants est fort. Par exemple, pour un barreau en YAG(n = 1,82) placé dans de l'air (n = 1), le MEP 2D carré existe en réflexion totale, ainsi que tous les MEP 2D polygonaux d'ordre supérieur (pentagone, hexagone, ...). Plus l'indice de l'enveloppe est proche de celui du barreau, plus l'incidence des MEP 2D sur la face du barreau est rasante pour conserver un fort coefficient de réflexion. Pour un indice donné de l'enveloppe, les modes MEP 2D ont un angle limite de réflexion en dessous duquel ils subissent trop de pertes pour exister. Associée à cet angle, il y a une taille du côté déterminé du MEP polygonal. Si on réalise une zone dépolie diffusante d'une fraction de la périphérie supérieure à cette taille déterminée de ce côté, alors on supprime les MEP 2D existant dans cette section.

Les modes MEP 3D se développent également selon une forme polygonale qui rebondit sur la périphérie interne du barreau, si on regarde leur trace dans une section du barreau, mais ils ont, en plus, une propagation longitudinale qui les amène à rebondir également sur les faces extrêmes dudit barreau. Leur trajet s'apparente à une spirale segmentée. L'existence de tels modes MEP 3D dépend de leur incidence sur les faces extrêmes, de leur incidence sur la périphérie et de l'indice de l'enveloppe. Afin de supprimer de tels modes MEP 3D, une solution consiste à disposer la zone dépolie diffusante à la périphérie du barreau sur une longueur telle que le pas du mode MEP 3D enjambant cette zone possède une incidence sur la face extrême telle que la perte par réflexion l'empêche d'exister.

De ce qui précède, on comprendra aisément qu'une partie de zone dépolie diffusante, de forme annulaire autour dudit barreau, peut éliminer les modes MEP 3D qui se développent en spirale. En effet, à cause de cette partie annulaire de zone dépolie diffusante, les modes MEP 3D ne peuvent ni parcourir tout le barreau, ni parvenir aux extrémités de celui-ci pour se réfléchir sur les faces d'extrémité. Pour des raisons d'efficacité, l'étendue longitudinale de ladite partie annulaire de zone dépolie diffusante doit être au moins égale au diamètre du barreau.

Pour éviter que ladite partie annulaire de zone dépolie diffusante ne nuise à la propagation du faisceau de pompage, on la dispose de préférence dans une portion du barreau dans laquelle ne transite qu'un faible flux de faisceau de pompage. Par exemple :
- si ledit barreau est pompé par un faisceau de pompage par une seule de ses faces d'extrémité longitudinale, ladite partie annulaire de zone dépolie diffusante est disposée au voisinage de l'autre desdites faces d'extrémité longitudinale du barreau ;
- si ledit barreau est pompé par un faisceau de pompage chacune de ses faces d'extrémité longitudinale, ladite partie annulaire de zone dépolie diffusante est disposée au voisinage de la partie médiane du barreau.

Dans ces cas, l'étendue longitudinale de ladite partie annulaire de zone dépolie peut être très supérieure au diamètre du barreau.

On remarquera qu'une telle partie annulaire de zone dépolie diffusante ne peut éliminer tous les modes MEP 2D se propageant dans des sections du barreau et ne peut donc être satisfaisante vis-à-vis de l'élimination de ces derniers que dans des cas particuliers, comme par exemple faible gain, indice de réfraction des moyens d'enveloppe proche de l'indice de réfraction du barreau, ...

Aussi, afin d'éliminer les modes MEP 2D de façon certaine, ladite zone dépolie diffusante comporte de plus au moins une partie en forme de bande, dont la direction générale est au moins approximativement longitudinale par rapport audit barreau, apte à interrompre les trajets laser parasites bouclés à l'intérieur de celui-ci. Une telle partie en forme de bande peut suivre une génératrice dudit barreau, s'enrouler en spirale autour de celui-ci, être constituée d'une pluralité de segments individuels disposés sur des génératrices différentes du barreau, etc ... Eventuellement, cette partie en forme de bande peut n'être prévue que dans les zones du barreau à fort dopage.

La largeur de la partie en forme de bande de ladite zone dépolie diffusante doit être supérieure à la distance séparant deux réflexions internes consécutives du mode MEP 2D de plus petit ordre, à l'intérieur dudit barreau. Cette largeur se détermine facilement par le calcul à partir de l'incidence par rapport à la surface latérale et des indices de réfraction du barreau et de l'enveloppe. Par exemple, pour un barreau en YAG:Nd, d'indice égal à 1,82, et une enveloppe d'indice égal à 1,65, on détermine que ledit plus petit ordre est égal à 8. La largeur de ladite bande doit donc être égale au 1/8 de la surface latérale du barreau.

De préférence, ladite enveloppe est formée par un film fluide et, pour des raisons de transmission thermique, son épaisseur est au plus égale à 500*µ*m. Ce film peut être liquide (polyphényl éther), ou bien constitué par une colle, par un gel ou par une graisse (graisse thermique translucide ou graisse à vide translucide). Avantageusement, cette enveloppe est absorbante pour au moins l'une des radiations émises par le barreau.

Avantageusement également, au-delà de cette enveloppe, la tenue mécanique, incluant à la fois l'enveloppe et l'élément actif (barreau), peut être absorbante pour les radiations lasers afin de minimiser les effets parasites. A cette fin, une anodisation noire de l'intérieur du canal contenant barreau et enveloppe est préférable.

La présente invention concerne également une source laser comportant :
- un élément actif pour source laser ;
- un système de pompage muni de diodes laser de pompage qui sont susceptibles d'émettre au moins un faisceau de pompage ;
- un système optique de transport pour diriger le faisceau de pompage émis par lesdites diodes laser dans ledit élément actif de manière à obtenir un pompage longitudinal ; et
- une cavité optique permettant d'extraire au moins un rayonnement laser.

Selon l'invention, ladite source laser est remarquable en ce que ledit élément actif est du type précité.

De façon avantageuse, ledit système de pompage est formé de manière à engendrer un faisceau de pompage :
- qui comporte une stabilité de l'énergie déposée stable à plus de 20% sur plusieurs dizaines de degrés ; et/ou
- qui est compris dans un angle solide prédéterminé relatif audit barreau.

Dans un mode de réalisation particulier, ledit système de pompage comporte des modules (ou empilements) de diodes, formés de semi-conducteurs issus de différents disques (waffers). La somme des émissions spectrales des différents semi-conducteurs engendre ainsi un spectre plus large que celui d'une diode unique. De plus, avantageusement, chaque module de diodes comporte un moyen de refroidissement, ce qui permet d'obtenir une situation thermique spécifique et un fonctionnement également étalé du spectre.

Par ailleurs, de façon avantageuse, ladite source laser peut comporter, de plus, des moyens pour engendrer au moins un double passage du faisceau de pompage dans l'élément actif.

Ledit système de pompage peut être composé de deux blocs, chacun apportant une radiation de pompage par chacune des deux extrémités du barreau, afin de répartir de manière plus homogène le dépôt énergétique sur la longueur du barreau et réduire de cette manière la propension des modes MEP et de l'amplification ASE à se développer dans les plans d'entrée du barreau.

Les figures du dessin annexé feront bien comprendre comment l'invention peut être réalisée. Sur ces figures, des références identiques désignent des éléments semblables.

La figure 1 est le schéma synoptique d'une source laser connue.

La figure 2 illustre schématiquement les modes d'émission laser parasites à deux et à trois dimensions à l'intérieur de l'élément actif de la source laser de la figure 1 .

Les figures 3, 4 et 5 illustrent schématiquement trois exemples de l'élément actif conforme à la présente invention.

La figure 6 est un diagramme du spectre d'absorption d'un matériau YAG dopé au Néodyne à 1 %, l'axe des abscisses portant les longueurs d'onde λ (en nm) et l'axe des ordonnées indiquant le coefficient d'absorption α (en cm⁻¹).

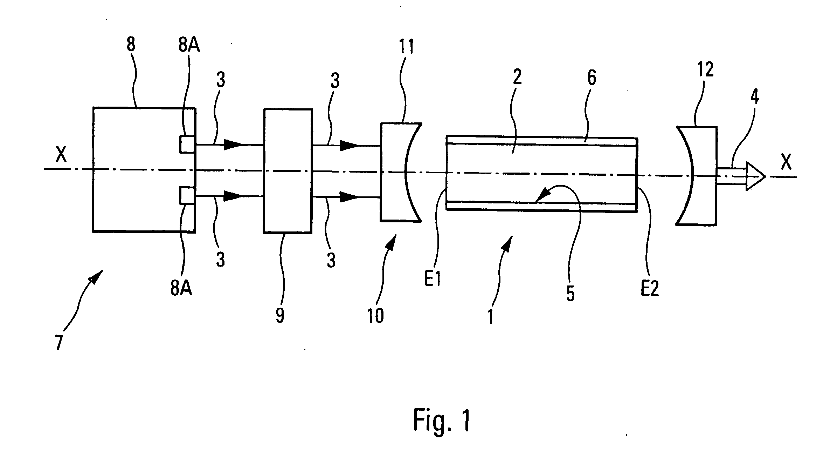

L'élément actif 1, de type connu et représenté schématiquement sur la figure 1, comporte un barreau allongé 2 qui comprend une matrice dopée susceptible d'absorber un faisceau de pompage 3, pour amplifier au moins un rayonnement laser 4 se propageant longitudinalement selon un axe X-X. La surface latérale 5 du barreau 2 est polie (donc réfléchissante) et recouverte d'une enveloppe 6 présentant un indice de réfraction plus petit que celui dudit barreau. Ainsi, le faisceau de pompage 3 peut être maintenu dans le barreau 2 grâce à des réflexions totales internes sur ladite surface latérale 5.

Cet élément actif 1 peut être intégré dans une source laser 7 telle que représentée à titre d'exemple sur la figure 1.

Ladite source laser 7 comporte, de façon usuelle, en plus dudit élément actif 1 :
- un système de pompage 8 usuel, qui comprend des diodes de pompage 8A de type laser et qui est susceptible d'émettre au moins un faisceau de pompage 3 ;
- un système optique de transport 9 usuel, pour diriger le faisceau de pompage 3 émis par ledit système de pompage 8 dans ledit élément actif 1 de manière à obtenir un pompage longitudinal, à travers une face d'extrémité E1 dudit barreau 2 ; et
- une cavité optique 10 usuelle, d'axe X-X, comprenant notamment un miroir réfléchissant 11 et un miroir 12 partiellement transparent, qui sont placés en regard l'un de l'autre. Cette cavité optique 10 confère au rayonnement laser 4, obtenu par l'amplification laser et émis à travers ledit miroir 12 selon l'axe X-X, ses caractéristiques de directivité et de géométrie. Ladite cavité optique peut également contenir des moyens de déclenchement usuels (QSwitch), non représentés sur la figure 1, de type électro-optique ou acousto-optique par exemple.

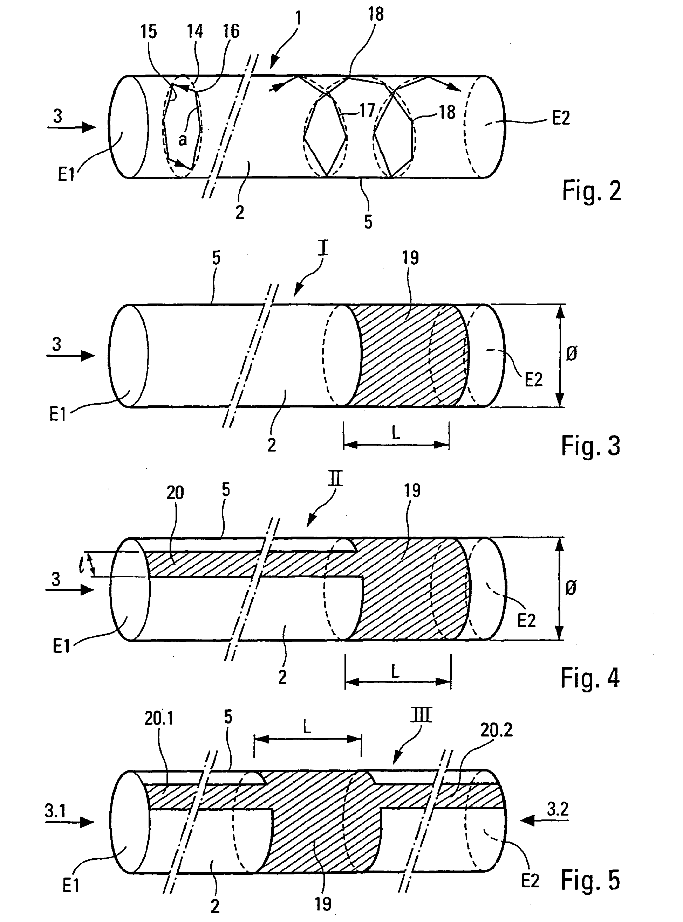

Comme cela est illustré schématiquement sur la figure 2, en fonctionnement, le barreau 2 (représenté sans son enveloppe 6) est le siège d'émissions laser parasites. Selon un premier mode, dit mode MEP 2D (voir ci-dessus), ces émissions laser parasites se développent dans des sections 14 du barreau 2 en suivant des trajets en forme de polygone 15, chaque sommet 16 d'un polygone 15 constituant un rebond par réflexion interne sur la surface latérale 5. Selon un autre mode, dit mode MEP 3D (voir ci-dessus), ces émissions laser parasites suivent des spirales segmentées 1 7 se propageant longitudinalement dans ledit barreau 2, avec des points 18 de rebond 11 par réflexion interne sur la surface latérale 5.

Selon une particularité importante de la présente invention, afin d'éliminer de tels modes parasites MEP 3D, on dépolit la surface latérale 5 selon une zone annulaire 19 entourant ledit barreau 2, comme dans l'élément actif I montré à titre d'exemple (sans l'enveloppe 6) par la figure 3. La zone annulaire dépolie 19 de la surface latérale 5 est donc diffusante et élimine les points de rebond 18. On obtient de bons résultats pour l'élimination des modes MEP 3D lorsque l'étendue longitudinale L de la zone annulaire diffusante 19 est au moins égale au diamètre φ du barreau 2.

Comme indiqué ci-dessus, la zone annulaire diffusante 19 est de préférence disposée dans une portion du barreau dans laquelle ne transite qu'un faible flux du faisceau de pompage 3. Aussi, dans l'exemple de la figure 3, où l'on a supposé que, comme dans la source laser 7 de la figure 1, le faisceau de pompage 3 est adressé au barreau 2 par la seule face d'extrémité E1 de ce dernier, ladite zone annulaire diffusante 19 est disposée au voisinage de l'autre face d'extrémité E2 dudit barreau 2.

Par ailleurs, afin d'éliminer les modes parasites MEP 2D, selon une autre particularité de la présente invention -voir le mode de réalisation II de la figure 4- on dépolit la surface latérale 5 du barreau 2 selon une portion de bande 20, de direction générale au moins approximativement longitudinale par rapport à celui-ci. La largeur ℓ de ladite portion de bande diffusante 20 ainsi obtenue est au moins égale à la longueur a (voir la figure 2) d'un côté du polygone 15 correspondant au mode MEP 2D de plus petit ordre. Bien que représentée rectiligne et d'un seul tenant sur la figure 4, ladite portion de bande 20 pourrait être discontinue et/ou présenter toute forme (hélice, par exemple) désirée.

Dans la variante de réalisation III de l'élément actif conforme à la présente invention, représentée sur la figure 5, le barreau 2 est pompé à travers chacune de ses faces d'extrémité E1 et E2, respectivement par des faisceaux de pompage 3.1 et 3.2. Dans ce cas, la zone annulaire diffusante 19 est avantageusement disposée dans la partie médiane dudit barreau 2 (là où ne transite qu'un faible flux de pompage) et une portion de bande 20.1, 20.2 (analogue à la portion de bande 20) peut être prévue de part et d'autre de ladite zone annulaire diffusante médiane 19.

Quelle que soit sa configuration, la zone diffusante 19, 20, 20.1, 20.2 s'étend sur ledit barreau 2 sur une fraction de ladite surface latérale 5 de celui-ci au moins approximativement comprise entre 5% et 40%.

Par ailleurs, l'enveloppe 6 au contact de la surface latérale 5 du barreau 2 est choisie pour être apte à réfléchir au moins 80% du faisceau de pompage 3 dans le barreau 2. Bien entendu, cette enveloppe 6 doit présenter un indice de réfraction inférieur à celui du barreau 2 et être peu absorbante pour le faisceau de pompage 3, 3.1, 3.2, de telle sorte que la réflexion totale à son interface avec le barreau 2 s'effectue avec l'efficacité maximale. En revanche, ladite enveloppe 6 peut être préférentiellement absorbante pour les radiations laser.

Une telle enveloppe est avantageusement formée par un film fluide. Elle peut par exemple être composée par une colle qui assure une jonction thermique et mécanique entre le barreau et la monture (non représentée) qui l'entoure, sans que cette colle ait forcément des caractéristiques d'accrochage prononcées. Cette enveloppe périphérique 6 peut également être composée d'un liquide d'indice, d'un gel ou d'une graisse. Pour que la fonction de transfert thermique entre le barreau et sa monture soit bonne, on préférera une épaisseur d'enveloppe inférieure à 500*µ*m.

Par ailleurs, la longueur et le dopage du barreau 2 sont tels que la fraction de l'énergie du faisceau de pompage 3, absorbée par le barreau 2, est au moins égale à 80% sur une gamme spectrale supérieure à 15 nanomètres. Le barreau 2 peut présenter une variation longitudinale de dopage, selon l'axe X-X, avec le dopage le plus faible qui est limité à une valeur prédéterminée, par exemple 0,1 %, au niveau de la ou des face(s) d'extrémité E1, E2 d'entrée du faisceau de pompage 3.1, 3.2 dans l'élément actif 1 .

Ainsi, en limitant le dopage en entrée(s) du barreau 2, on limite l'absorption, et donc le gain transverse, dans cette zone, ce qui permet de réduire l'apparition à la fois d'une amplification ASE et de modes MEP. Le matériau du barreau 2 doit particulièrement respecter ce critère lorsque la longueur d'onde de pompage est située au maximum d'absorption dudit matériau.

La baisse de dopage en entrée(s) du barreau 2 diminue l'efficacité d'absorption, en particulier lorsque la longueur d'onde de pompage est située au minimum d'absorption dudit matériau dans la bande spectrale considérée. Il importe donc de prévoir, au-delà d'une distance prédéterminée, par exemple quelques millimètres en aval de la ou des faces d'entrée E1, E2, un niveau de dopage plus élevé.

Le matériau du barreau 2 peut présenter une variation longitudinale de dopage continue, ou une variation longitudinale de dopage par pas.

Dans le premier cas, ledit matériau est de préférence un matériau à gradient de dopage. De tels matériaux peuvent être réalisés par procédé céramique.

Il est également possible d'utiliser plusieurs cristaux de dopage progressif pour atteindre à l'entrée de chacun de ces derniers le gain maximal de démarrage de l'amplification ASE.

Pour les barreaux composés d'un seul dopage et d'une seule matrice ou de plusieurs dopages différents et/ou de plusieurs matrices différentes, afin d'obtenir une insensibilité à la variation de longueur d'onde des diodes, le matériau possède un dopage et une longueur tels, qu'avec un pompage longitudinal, la fraction absorbée Abs pour la longueur d'onde la moins absorbante de la plage spectrale de fonctionnement est supérieure à environ 90%.

Dans le cas d'un matériau homogène, on a donc Abs =1-Exp[-α(λ),L] > 90%, soit α(λ).L> 2.3

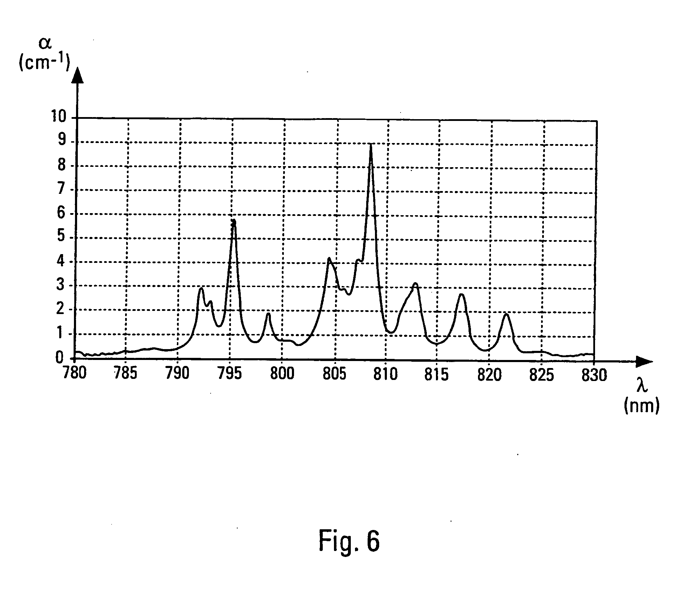

Dans le cas représenté en exemple sur la figure 6 d'un YAG dopé Néodyme à 1% où α(λ=802nm)=0,6cm⁻¹ au minimum d'absorption, il faut que la longueur de matériau dopé soit supérieure à 2·3/α(λ), c'est-à-dire supérieure à 3.8cm.

Par ailleurs, dans un mode de réalisation préféré, ledit système de pompage 8 comporte des modules (ou empilements) de diodes 8A, formés de semi-conducteurs issus de différents disques (waffers). La somme des émissions spectrales des différents semi-conducteurs engendre ainsi un spectre plus large que celui d'une diode unique. De plus, de préférence, chaque module de diodes 8A comporte un moyen de refroidissement individuel (non représenté), ce qui permet d'obtenir un fonctionnement également étalé du spectre.

En outre, dans un mode de réalisation particulier, ledit système de pompage 8 est formé de manière à engendrer un faisceau de pompage 3 qui comporte une stabilité de l'énergie déposée stable à plus de 20% sur plusieurs dizaines de degrés.

Par ailleurs, ladite source laser 8 comporte, de plus, des moyens (non représentés) pour engendrer au moins un double passage du faisceau de pompage 3 dans l'élément actif 1.

Les diodes de pompage 8A peuvent ne pas être refroidies activement, mais dissiper leur énergie, pendant une séquence limitée dans le temps, dans une structure solidaire, dont la montée en température va limiter leur propre élévation de température. La température de départ et cette élévation de température peuvent être telles que leur longueur d'onde d'émission, pendant toute la séquence, reste comprise dans la plage spectrale de fonctionnement de sorte que, malgré une température éventuellement basse au départ de la séquence, et une dérive de cette température au cours du temps, le laser garde un fonctionnement assez stable au cours de la séquence sans utiliser de moyen actif de stabilisation de la température.

## Revendications

1. Elément actif (I, II, III) pour source laser (7), comportant :
- un barreau allongé (2) à surface latérale réfléchissante (5), dopé pour être susceptible d'absorber au moins un faisceau de pompage (3) se propageant longitudinalement dans ledit barreau (2) afin d'amplifier au moins un rayonnement laser (4) se propageant également longitudinalement, la longueur et le dopage dudit barreau (2) étant tels que la fraction de l'énergie dudit faisceau de pompage (3), absorbée par ledit barreau, est au moins égale à 80%, ledit barreau (2) en fonctionnement étant le siège d'émissions laser parasites ; et
- une enveloppe (6) au contact de ladite surface latérale (5) dudit barreau (2) et présentant un indice de réfraction plus petit que celui dudit barreau (2), ladite enveloppe (6) étant apte à réfléchir au moins 80% dudit faisceau de pompage (3) dans ledit barreau,
**caractérisé en ce que**
- sur une partie de ladite surface latérale réfléchissante (5) dudit barreau (2), est pratiquée, dans une portion dudit barreau (2) dans laquelle ne transite qu'un moindre flux de faisceau de pompage (3), au moins une zone dépolie diffusante (19, 20 ; 20.1 ; 20.2) apte à interrompre les trajets des modes laser parasites se propageant dans ledit barreau (2) par réflexions internes sur ladite surface latérale (5) ,
- l'étendue longitudinale de ladite zone dépolie étant au moins égale à la dimension transversale du barreau.

2. Elément actif selon la revendication 1,
**caractérisé en ce que** la fraction de l'énergie de pompage absorbée est supérieure à 80% sur une gamme spectrale d'une largeur supérieure à 15 nanomètres.

3. Elément actif selon l'une des revendications 1 ou 2,
**caractérisé en ce que** l'étendue totale de ladite zone dépolie diffusante sur ledit barreau (2) est comprise entre 5% et 40% de la surface latérale (5) dudit barreau (2).

4. Elément actif selon l'une des revendications 1 à 3, **caractérisé en ce que** ladite zone dépolie diffusante comporte au moins une partie (19) de forme annulaire entourant ledit barreau (2).

5. Elément actif selon la revendication 4,
**caractérisé en ce que** l'étendue longitudinale (L) de ladite partie annulaire (19) de zone dépolie diffusante est au moins égale au diamètre (Φ) dudit barreau (2).

6. Elément actif selon l'une des revendications 4 ou 5, dans lequel ledit barreau (2) est pompé par un faisceau de pompage (3) à travers une seule (E1) des faces d'extrémité longitudinale de celui-ci,
**caractérisé en ce que** ladite partie annulaire (19) de zone dépolie diffusante est disposée au voisinage de l'autre (E2) desdites faces d'extrémité longitudinale dudit barreau (2).

7. Elément actif selon l'une des revendications 4 ou 5, dans lequel ledit barreau (2) est pompé par des faisceaux de pompage (3.1 ; 3.2) à travers chacune des faces d'extrémité longitudinale (E1 ; E2) de celui-ci,
**caractérisé en ce que** ladite partie annulaire (19) de zone dépolie diffusante est disposée dans la partie médiane dudit barreau (2).

8. Elément actif selon l'une des revendications 4 à 7,
**caractérisé en ce que** ladite zone dépolie diffusante comporte de plus au moins une partie (20 ; 20. ; 20.2) en forme de bande, de direction générale longitudinale par rapport audit barreau (2), apte à interrompre les trajets laser parasites en forme de polygone à l'intérieur de celui-ci.

9. Elément actif selon la revendication 8,
**caractérisé en ce que** ladite partie en forme de bande est composée de segments individuels, disposés sur des génératrices différentes dudit barreau (2).

10. Elément actif selon la revendication 8,
**caractérisé en ce que** ladite partie en forme de bande s'enroule en spirale sur la longueur dudit barreau.

11. Elément actif selon la revendication 1 à 10,
**caractérisé en ce que** ladite enveloppe (6) est formée par un film fluide, dont l'épaisseur est au plus égale à 500 µm.

12. Elément actif selon la revendication 11,
**caractérisé en ce que** ladite enveloppe (6) est absorbante des rayonnements laser.

13. Source laser (7) comportant :
- un élément actif (1) pour source laser ;
- un système de pompage (8a) muni de diodes laser de pompage (8A) qui sont susceptibles d'émettre au moins un faisceau de pompage (3 ; 3.1 ; 3.2) ;
- un système optique de transport (9) pour diriger le faisceau de pompage émis par lesdites diodes laser dans ledit élément actif (1) de manière à obtenir un pompage longitudinal ; et
- une cavité optique (10) permettant d'extraire au moins un rayonnement laser (4),
**caractérisé en ce que** ledit élément actif (1) est tel que spécifié sous l'une quelconque des revendications 1 à 12.

14. Source laser (7) selon la revendication 13,
**caractérisé en ce que** ledit système de pompage (8) comporte des modules de diodes (8A), formés de semi-conducteurs issus de différents disques.

## Claims

1. An active element (I, II, III) for a laser source (7), comprising:
- an elongated bar (2) with reflective lateral surface (5), doped to be able to absorb at least a pumping beam (3) being propagated at least approximately longitudinally in said bar (2) in order to amplify at least a laser radiation (4) also being propagated longitudinally, the length and the doping of said bar (2) being such that the fraction of the energy of said pumping beam (3), absorbed by said bar (2), is at least equal to 80%, said bar (2) being the seat of spurious laser emissions ; and
- a jacket (6) in contact with said lateral surface (5) of said bar (2) and presenting a refractive index smaller than that of said bar (2), said jacket (6) being able to reflect at least 80% of said pumping beam (3) in said bar (2),
**characterized in that** :
in a part of said reflective lateral surface (5) of said bar (2), there is, in a part of said bar (2) in which only a weah flux of the pumping beam (3) tasses, at least one dull-ground diffusing zone (19, 20; 20.1, 20.2) able to interrupt the paths of spurious laser modes being propagated in said bar (2) by total internal reflections on said lateral surface (5), the longitudinal extent of said dull-ground diffusing zone being at least equal to the transverse dimension of said bar.

2. The active element as claimed in claim 1,
**characterized in that** the fraction of the pumping energy that is absorbed is greater than 80% over a spectral range greater than 15 nanometers.

3. The active element as claimed in one of claims 1 or 2,
**characterized in that** the total extent of said dull-ground diffusing zone on said bar (2) is at least approximately between 5% and 40% of the lateral surface (5) of said bar (2).

4. The active element as claimed in one of claims 1 to 3,
**characterized in that** said dull-ground diffusing zone includes at least one part (19) of annular form surrounding said bar (2).

5. The active element as claimed in claim 4,
**characterized in that** the longitudinal extent (L) of said annular part (19) of the dull-ground diffusing zone is at least equal to the diameter (φ) of said bar (2).

6. The active element as claimed in one of claims 4 or 5, in which a pumping beam (3) is addressed to said bar (2) by just one (E1) of the longitudinal end faces of the latter,
**characterized in that** said annular part (19) of the dull-ground diffusing zone is positioned in the vicinity of the other (E2) of said longitudinal end faces of said bar (2).

7. The active element as claimed in one of claims 4 or 5, in which a pumping beam (3.1; 3.2) is addressed to said bar (2) by each of the longitudinal end faces (E1; E2) of the latter,
**characterized in that** said annular part (19) of the dull-ground diffusing zone is positioned in the vicinity of the median part of said bar (2).

8. The active element as claimed in one of claims 4 to 7,
**characterized in that** said dull-ground diffusing zone also includes at least a part (20; 20.1, 20.2) in strip form, of a general direction at least approximately longitudinal in relation to said bar (2), able to interrupt the spurious laser paths looped inside the latter.

9. The active element as claimed in claim 8,
**characterized in that** said part in strip form is made up of individual segments, arranged on different generatrices of said bar (2).

10. The active element as claimed in claim 8,
**characterized in that** said part in strip form is wound spirally over the length of said bar.

11. The active element as claimed in one of claims 1 to 10,
**characterized in that** said jacket (6) is formed by a fluid film, the thickness of which is no more than 500 µm.

12. The active element as claimed in claim 11,
**characterized in that** said jacket (6) is absorbent to laser radiations.

13. A laser source (7) comprising:
- an active element (1) for a laser source;
- a pumping system (8) provided with pumping laser diodes (8A) which can emit at least one pumping beam (3; 3.1; 3.2);
- an optical transport system (9) for directing the pumping beam emitted by said laser diodes in said active element (1) so as to obtain a longitudinal pumping; and
- an optical cavity (10) making it possible to extract at least one laser radiation (4),
**characterized in that** said active element (1) is as specified under any one of claims 1 to 12.

14. The laser source (7) as claimed in claim 13,
**characterized in that** said pumping system (8) comprises diode modules (8A), formed by semiconductors obtained from different wafers.

## Patentansprüche

1. Aktives Element (I, II, III) für Laserquellen (7), umfassend:
- einen länglichen Stab (2) mit einer reflektierenden Mantelfläche (5), der dotiert ist, um mindestens einen Pumpstrahl (3) zu absorbieren, der sich längsseitig in dem Stab (2) ausbreitet, um mindestens eine Laserstrahlung (4) zu verstärken, die sich ebenfalls längsseitig ausbreitet, wobei die Länge und die Dotierung des Stabs (2) derart sind, dass der Anteil der Energie des Pumpstrahls (3), der von dem Stab absorbiert wird, mindestens gleich 80 % ist, wobei der Stab (2) im Betrieb der Sitz von Laserstöremissionen ist; und
- eine Ummantelung (6) in Kontakt mit der Mantelfläche (5) des Stabs (2), und die einen geringeren Brechungsindex als den des Stabs (2) aufweist, wobei die Ummantelung (6) dazu geeignet ist, mindestens 80 % des Pumpstrahls (3) in den Stab zu reflektieren, **dadurch gekennzeichnet, dass**
- auf einem Teil der reflektierenden Mantelfläche (5) des Stabs (2) in einem Abschnitt des Stabs (2), durch den nur ein kleinerer Pumpstrahlfluss (3) geht, mindestens ein streuender mattierter Bereich (19, 20; 20.1; 20.2) eingerichtet ist, der dazu geeignet ist, die Wege der Störlasermodi, die sich in dem Stab (2) ausbreiten, durch interne Reflektionen auf der Mantelfläche (5) zu unterbrechen,
- wobei die Längsausdehnung des mattierten Bereichs mindestens gleich der Querabmessung des Stabs ist.

2. Aktives Element nach Anspruch 1,
**dadurch gekennzeichnet, dass** der Anteil der absorbierten Pumpenergie in einem Spektralbereich einer Breite von mehr als 15 Nanometern größer als 80 % ist.

3. Aktives Element nach einem der Ansprüche 1 oder 2,
**dadurch gekennzeichnet, dass** das die Gesamtausdehnung des streuenden mattierten Bereichs auf dem Stab (2) zwischen 5 % und 40 % der Mantelfläche (5) des Stabs (2) liegt.

4. Aktives Element nach einem der Ansprüche 1 bis 3,
**dadurch gekennzeichnet, dass** der streuende mattierte Bereich mindestens einen ringförmigen Teil (19) umfasst, der den Stab (2) umgibt.

5. Aktives Element nach Anspruch 4,
**dadurch gekennzeichnet, dass** die Längsausdehnung (L) des ringförmigen Teils (19) des streuenden mattierten Bereichs mindestens gleich dem Durchmesser (Φ) des Stabs (2) ist.

6. Aktives Element nach einem der Ansprüche 4 oder 5, wobei der Stab (2) von einem Pumpstrahl (3) durch eine einzige (E1) seiner Längsendseiten gepumpt wird,
**dadurch gekennzeichnet, dass** der ringförmige Teil (19) des streuenden mattierten Bereichs in der Nähe der anderen (E2) der Längsendseiten des Stabs (2) angeordnet ist.

7. Aktives Element nach einem der Ansprüche 4 oder 5, wobei der Stab (2) von Pumpstrahlen (3.1; 3.2) durch jede seiner Längsendseiten (E1; E2) gepumpt wird;
**dadurch gekennzeichnet, dass** der ringförmige Teil (19) des streuenden mattierten Bereichs in dem mittleren Teil des Stabs (2) angeordnet ist.

8. Aktives Element nach einem der Ansprüche 4 bis 7,
**dadurch gekennzeichnet, dass** der streuende mattierte Bereich zudem mindestens einen bandförmigen Teil (20; 20.1; 20.2) mit allgemeiner Längsrichtung im Verhältnis zum Stab (2) umfasst, der dazu geeignet ist, die vieleckig geformten Störlaserwege im Innern desselben zu unterbrechen.

9. Aktives Element nach Anspruch 8,
**dadurch gekennzeichnet, dass** der bandförmige Teil aus einzelnen Segmenten besteht, die auf verschiedenen Mantellinien des Stabs (2) angeordnet sind.

10. Aktives Element nach Anspruch 8,
**dadurch gekennzeichnet, dass** der bandförmige Teil sich spiralförmig über die Länge des Stabs wickelt.

11. Aktives Element nach Anspruch 1 bis 10,
**dadurch gekennzeichnet, dass** die Ummantelung (6) durch einen Fluidfilm gebildet wird, dessen Dicke höchstens 500 µm beträgt.

12. Aktives Element nach Anspruch 11,
**dadurch gekennzeichnet, dass** die Ummantelung (8) die Laserstrahlungen absorbiert.

13. Laserquelle (7), umfasst:
- ein aktives Element (1) für Laserquellen;
- ein Pumpsystem (8), das mit Pumplaserdioden (8A) versehen ist, die in der Lage sind, mindestens einen Pumpstrahl (3; 3.1; 3.2) zu emittieren;
- ein optisches Transportsystem (9), um den Pumpstrahl, der von den Laserdioden in dem aktiven Element (1) emittiert wird, derart zu leiten, dass ein Längspumpen erzielt wird; und
- einen optischen Resonator (10), der es ermöglicht, mindestens eine Laserstrahlung (4) zu entnehmen,
**dadurch gekennzeichnet, dass** das aktive Element (1) derart ist, wie es in einem der Ansprüche 1 bis 12 vorgegeben wird.

14. Laserquelle (7) nach Anspruch 13,
**dadurch gekennzeichnet, dass** das Pumpsystem (8) Diodenmodule (8A) umfasst, die aus Halbleitern aus verschiedenen Scheiben gebildet werden.
